# FASCICULE DE BREVET EUROPEEN

(11) **EP 3 330 731 B1**
(45) Date de publication et mention de la délivrance du brevet: **22.07.2020**
(21) Numéro de dépôt: 17202095.0
(22) Date de dépôt: 16.11.2017
(51) Int. Cl.: G01S 5/02, G01S 19/48

(54) **PROCEDE ET SYSTEME DE GEOLOCALISATION COLLABORATIVE**
VERFAHREN UND SYSTEM DER KOLLABORATIVEN GEOLOKALISIERUNG
METHOD AND SYSTEM FOR COLLABORATIVE GEOLOCATION

(30) Priorité: 17.11.2016 FR 1601634
(43) Date de publication de la demande: 06.06.2018
(73) Titulaire: Thales, 92400 Courbevoie (FR)
(72) Inventeur: HEURGUIER, Dominique, 92622 GENNEVILLIERS CEDEX (FR)
(74) Mandataire: Dudouit, Isabelle

(56) Documents cités:
- US-A1- 2009 046 005
- US-A1- 2012 021 764
- US-A1- 2013 281 120
- US-A1- 2013 335 273

## Description

L'invention concerne un procédé et un système de gestion collaborative au sein d'un système radiocommunication collaboratif comportant plusieurs nœuds.

Elle s'applique, par exemple, pour de la géolocalisation par télémétrie (plus connue sous le terme anglo-saxon de ranging), soit par balises (connue sous l'expression anglo-saxonne « Anchor Based Localization » ou ABL), soit de façon collaborative sur des voisins, géolocalisation sur signaux amis, ce qui fait partie des techniques connues sous l'expression anglo-saxonne « Anchor Free Localization » ou AFM.

Le problème technique de l'invention concerne la géolocalisation dans un réseau hétérogène comprenant plusieurs nœuds mobiles, dans lequel les nœuds ou pions ont des mobilités différentes et sont susceptibles de changer dynamiquement d'état, par exemple de passer d'un état mobile à un état statique. Les nœuds ou pions sont, par exemple des piétons, des véhicules, des bateaux, des drones ou des avions. Le changement d'état peut résulter de décisions sans rapport à la navigation. Il peut aussi être décidé pour améliorer ou maintenir la capacité de géolocalisation, par exemple face à une perte de signal de géolocalisation de type GPS (Global Position System) ou GNSS (Global Navigation System Satellite).

Différentes solutions de géolocalisation sont offertes dans les techniques de l'art antérieur de navigation collaborative. Par exemple, il existe des techniques de géolocalisation par ranging en considérant des positions d'ancres imprécises, en affectant aux ancres fixes des covariances prédéfinies et en appliquant un filtre de poursuite à chaque pion, le filtre étant choisi en fonction du type de mobilité des pions.

Les procédés et les systèmes décrits dans les deux demandes de brevet FR1601190 et FR1601189 du demandeur effectuent une géolocalisation par ranging en considérant des positions d'ancres imprécises. US 2009/046005 divulgue un système de positionnement intérieur / extérieur pour suivre la position absolue de tous les nœuds d'un réseau à l'intérieur et à l'extérieur. Le système utilise le positionnement GPS lorsqu'un signal est disponible et la télémétrie RF lorsqu'il n'est pas disponible. À l'intérieur, au moins trois nœuds de réseau doivent recevoir un signal GPS pour déterminer la position absolue.

Les solutions connues de l'art antérieur prenant en compte la navigation en trois dimensions consistent à définir un état dans les trois dimensions, ce qui donne trois variables d'état à l'ordre zéro, six variables à l'ordre un et neuf variables à l'ordre deux.

Très peu de solutions prennent en compte l'hétérogénéité des types de mobilité, et encore moins le changement dynamique de types de mobilité. Bien que certaines solutions permettent potentiellement de distinguer balises (fixes) et nœuds mobiles en affectant aux ancres fixes des covariances prédéfinies, elles sont sous optimales en cas de changement de mobilité d'un nœud. En effet, elles reposent sur l'attribution statique d'un modèle qui ne tient pas compte du changement éventuel de type de mobilité (fixe ou mobile) et le filtre de poursuite devient inapproprié après un changement de type de mobilité. D'autre part, les solutions prenant en compte la navigation 3D supposent une observabilité 3D, ce qui n'est que rarement le cas lorsque la plupart des nœuds sont globalement dans le même plan, particulièrement si une partie des nœuds est au sol.

L'objet de la présente demande de brevet est d'offrir un système et un procédé capables de géolocaliser différents pions ou nœuds dans un réseau, quelque soit le type de mobilité de ces nœuds tout en permettant des changements de type de mobilité à tout instant. En particulier, il peut s'agir de mobilité au sol ou aérien (aéronefs). Ainsi, l'idée mise en œuvre par l'invention va consister notamment à utiliser des filtres de poursuite adaptés et à prendre en compte différents modèles d'évolutions, dont le changement est commandé par les nœuds eux-mêmes. L'invention concerne aussi les réseaux collaboratifs hétérogènes constitués principalement de nœuds se déplaçant au sol mais comprenant également un ou plusieurs aéronefs de faible altitude. Ces réseaux étant généralement très peu observables en 3D lorsqu'ils reposent principalement sur de la télémétrie notamment en cas de dégradation du service GPS, l'idée consiste à résoudre d'abord la géolocalisation 2D (qui elle, est généralement bien observable) en négligeant l'altitude des aéronefs puis, dans un second temps, à estimer leurs altitudes sur la base des géolocalisations 2D.

L'invention concerne un procédé permettant de géolocaliser un ou plusieurs nœuds dans un réseau de communication, lesdits nœuds communiquant entre eux par des moyens radios appropriés, chaque nœud transmettant au moins des informations de position, d'état de mobilité, tout ou une partie des nœuds étant équipés d'un récepteur qui, couplé avec un dispositif satellitaire permet au nœud équipé du récepteur de se géolocaliser, ledit récepteur étant adapté à détecter une perte du signal satellitaire, le procédé est caractérisé en ce qu'il comporte au moins les étapes suivantes :
- Lors d'un changement de type de mobilité pour un premier nœud, ledit nœud ainsi que les autres nœuds du réseau qui reçoivent l'information de changement de type de mobilité dudit premier nœud choisissent un filtre de poursuite approprié pour le suivi de géolocalisation dudit nœud,
- En cas de déni de service GNSS complet, trois nœuds du réseau sont élus et leur état de mobilité est passé dans un état de mobilité quasi-statique, lesdits trois nœuds étant utilisés comme des ancres pour géolocaliser les autres nœuds.

Pour les nœuds aéronefs, le procédé met en œuvre une étape de géolocalisation en trois dimensions comprenant une première étape de géolocalisation par trilatération permettant de déterminer une trace au sol de l'aéronef en deux dimensions et une seconde étape d'estimation de l'altitude de l'aéronef.

Selon une variante de réalisation, le changement de type de mobilité, fixe, statique, changement de route de navigation d'un nœud est détecté automatiquement par un nœud.

Selon une autre variante, le changement de type de mobilité, fixe, statique, changement de route de navigation d'un nœud est commandé par un ordre externe au réseau.

Le procédé utilise, par exemple, les filtres de poursuite suivants:
- Pour une Ancre fixe, un modèle de Kalman position fixe deux dimensions, 2D,
- Pour un Piéton mobile un modèle de Kalman NCP (Near Constant Position) deux dimensions, 2D,
- Pour un Drone, un modèle de Kalman NCV (Near Constant Velocity) trois dimensions, 3D.

En cas de déni de service GNSS complet, le procédé comporte une étape d'élection d'au moins trois nœuds du réseau positionnés dans un état de mobilité quasi-statique et l'utilisation desdits trois nœuds comme des ancres pour géo localiser les autres nœuds par mesures de télémétrie.

L'invention concerne aussi un système pour géolocaliser un ou plusieurs nœuds dans un réseau de communication selon la revendication 7.

Le type de mobilité des nœuds dans le système peut être très hétérogène, par exemple, un réseau de véhicules terrestres complété d'un ou plusieurs aéronefs et/ou de balises fixes.

Un nœud peut comporter un dispositif GNSS.

D'autres caractéristiques et avantages de la présente invention apparaîtront mieux à la lecture de la description d'exemples de réalisation donnés à titre illustratif et nullement limitatif, annexée des figures qui représentent :
- Figure 1, un exemple de réseau comprenant trois nœuds pouvant changer d'état,
- Figure 2, le réseau dans un instant initial avec quatre piétons et un drone,
- Figure 3, une représentation du système après la perte de liaison GPS,
- Figure 4, un organigramme décrivant les étapes mises en œuvre par l'invention.

La description qui suit est donnée à titre illustratif dans le cas d'un réseau de radiolocalisation collaboratif comprenant plusieurs piétons communiquant entre eux grâce à des moyens de radiocommunication appropriés et un drone qui peut être piloté par un piéton. Dans l'exemple donné, le changement de type de mobilité peut notamment être décidé pour améliorer ou maintenir la capacité de géolocalisation, par exemple face à une perte de signal de géolocalisation de type GPS ou GNSS. Dans cet exemple, certains nœuds peuvent s'immobiliser et devenir des balises fixes palliant la perte de couverture GNSS et permettant d'assurer une continuité de géolocalisation des nœuds du réseau. Le choix des nœuds à immobiliser peut être décidé par un centre de décision opérationnel ou selon un mode opératoire prédéfini, par exemple selon un système de priorités associées aux nœuds du réseau

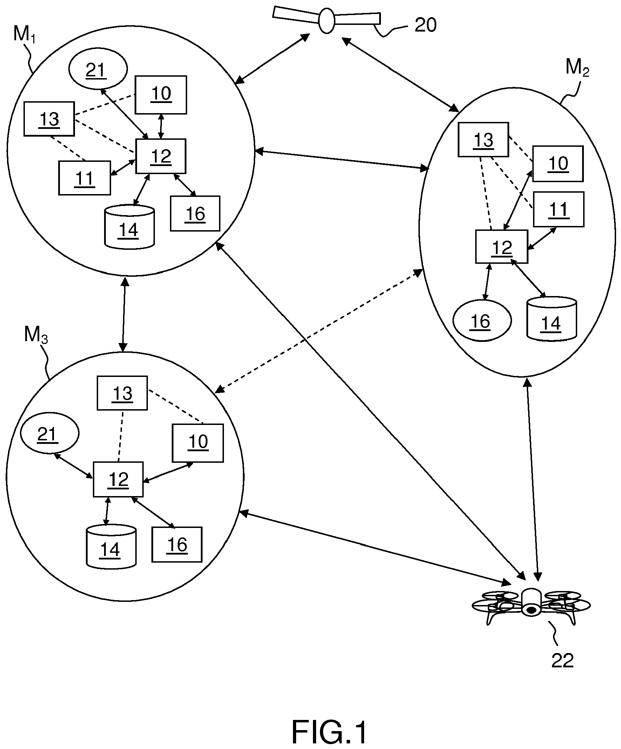

Le système de radiolocalisation collaboratif 1 comprend plusieurs nœuds Mi tel qu'il est illustré en figure 1 avec trois nœuds. Chaque nœud Mi (M₁, M₂, M₃) comporte, par exemple, un module de communication 10 adapté à transmettre aux autres nœuds du réseau des informations relatives à son état de mobilité et à sa position, un module de contrôle 15 de l'état du nœud, adapté à détecter un changement dans le type de mobilité du nœud, un processeur 12 adapté à choisir les filtres de poursuite CMM (contrôle multi modal) adaptés aux différents types de mobilité des nœuds afin de géolocaliser ledit nœud ainsi que de géolocaliser les autres noeuds du réseau et une batterie 13 ou dispositif d'alimentation. Chaque nœud peut disposer d'un capteur GNSS. Un nœud comprend une mémoire ou base de données 14 qui va contenir les filtres de poursuite CMM à utiliser en fonction de l'état de mobilité dans lequel se trouve un nœud, à un instant donné ou sur une période de temps donnée. La mémoire peut aussi intégrer un paramètre relatif au niveau de priorité d'un nœud dans un état de mobilité donné. Ces informations de type de mobilité et éventuellement de niveau de priorité seront transmises au module de contrôle 15 de l'état de mobilité d'un nœud, lequel peut être commandé par un opérateur. Un nœud peut aussi comporter un dispositif 16, tel qu'une centrale inertielle permettant de déterminer l'état du nœud à un instant donné, par exemple, le nœud est mobile ou le nœud est à l'arrêt. Ce dispositif de détection de mouvement est relié au module de contrôle du filtre de poursuite qui, en recevant l'information d'état du nœud, va sélectionner le modèle ou filtre de poursuite à utiliser pour effectuer les mesures de distance di,j entre nœuds Mi, Mj. Les nœuds Mi communiquent entre eux des informations de position, d'état de mobilité, de niveau de priorité, et d'éventuelles mesures, telles que des mesures de télémétrie sur les autres nœuds, etc., par exemple, par des moyens radios, une liaison radiofréquence, sans fil ou par d'autres moyens connus de l'homme du métier.

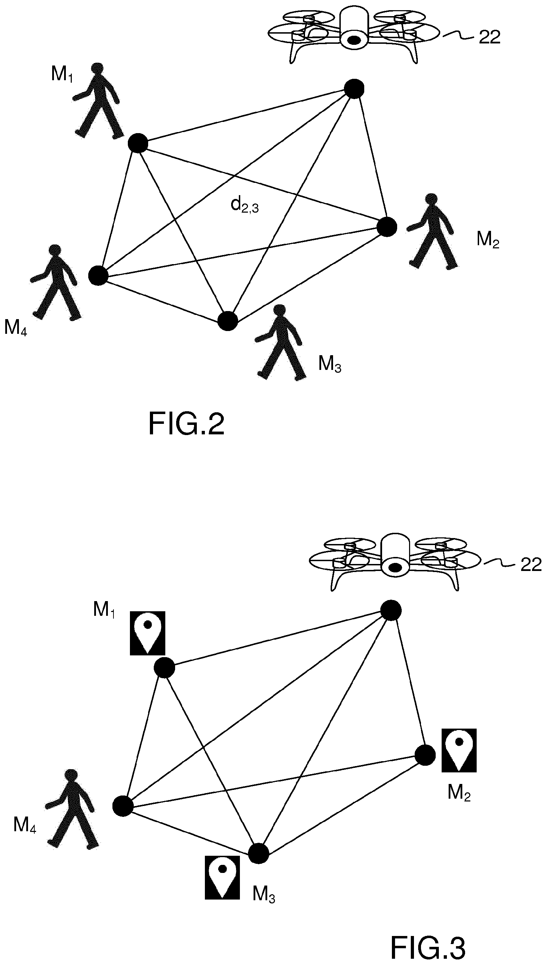

Le système comporte aussi un dispositif pour déterminer la position absolue de tout ou partie des nœuds. Ainsi, tout ou partie des nœuds peuvent par exemple être équipés d'un récepteur 11 qui, couplé avec un dispositif satellitaire 20, permet au nœud équipé du récepteur 11 de se géolocaliser. Le récepteur 11 est aussi adapté à détecter une perte du signal satellitaire, information qu'il transmettra au processeur 12 afin que ce dernier choisisse un type de mobilité pour permettre de continuer le processus de géolocalisation. Ce dispositif satellitaire 20 peut être un système de géolocalisation GPS (Global Positioning System), un système GNSS (Global Navigation Satellite System), un moyen de topographie, etc. Sur la figure 2, le nœud M₂ est équipé d'un récepteur, alors que le nœud M₃ ne l'est pas.

Un nœud Mi comporte aussi un dispositif de mesures de distance ou dispositif de ranging ou un capteur de télémétrie 21 colocalisé par exemple sur un nœud Mi ou sur chacun des nœuds Mi du système. Par exemple, le dispositif de ranging peut se présenter sous la forme d'une carte électronique portée par le nœud. Selon une autre variante de réalisation, ce pourrait être une fonctionnalité du système de communication au niveau d'un nœud mesurant le temps mis par l'onde radio pour transiter entre les nœuds.

Les nœuds appartenant au réseau de communication peuvent présenter des types de mobilité très hétérogènes. Il est ainsi possible d'envisager un réseau de véhicules terrestres complété d'un ou de plusieurs aéronefs et/ ou de balises fixes.

Le drone 22 est considéré comme un nœud du réseau.

Les filtres de poursuite sont connus de l'homme du métier et ne seront pas détaillés dans la présente description. Les filtres de poursuite peuvent correspondre aux modèles suivants : position fixe, position quasi fixe, mobilité 2D ou 3D avec type de mouvement rectiligne uniforme, mobilité 2D ou 3D avec giration, mobilité type de route, etc.

La figure 2 illustre à un moment donné un réseau de radiolocalisation collaboratif comprenant quatre piétons mobiles et un drone. Les piétons M₁, M₂, M₃ et M₄ et le drone 22 sont géolocalisés par GPS et par des mesures de ranging selon une technique connue de l'homme du métier.

La figure 3, illustre un exemple d'évolution de la situation initiale de la figure 1 suite à la perte de couverture GPS. Dans un état de mobilité, les piétons ne peuvent plus se localiser ou être localisés. Le procédé va utiliser différents filtres de poursuite CMM, un filtre étant adapté au type de mobilité de chaque nœud.

Dans cet exemple, suite à la perte de signal GPS, trois piétons M₁, M₂, M₃ s'immobilisent et deviennent des ancres fixes et le piéton M₄ reste mobile. Le drone 22 continue à évoluer. Du fait de la présence des trois piétons fixes (qui étant passés dans un modèle d'ancre fixe, continuent à diffuser leur position absolue à leurs voisins malgré la perte de GPS), le piéton mobile M₄ va pouvoir continuer à se géolocaliser en utilisant ces trois piétons statiques qu'il considère comme des balises. Le drone 22 se localise d'abord en deux dimensions avec les balises (piétons fixes) et le piéton mobile, puis estime son altitude comme il va être explicité ci-après.

Lors de la perte de la liaison GPS ou lorsqu'un nœud enregistre une diminution de puissance du signal, le récepteur 11 d'un nœud signale au module de contrôle 15 du filtre de poursuite à utiliser que la liaison GPS n'est plus disponible ou insuffisante pour se géolocaliser. Cette information de perte de signal utile pour la géolocalisation peut aussi être transmise manuellement par un opérateur au moyen, par exemple, d'un bouton déclencheur 30 équipant le dispositif du piéton. Sur réception de cette information de perte de signal, un nœud va décider de passer dans un état statique afin de servir d'ancre fixe pour permettre au processus de géolocalisation de continuer. Le processeur 12 du nœud Mi va identifier le filtre de poursuite IMM(mobilité) mémorisé dans sa base de données qui correspond à son nouvel état de mobilité à un instant t. A partir de cet instant, le piéton M₁ va communiquer aux autres nœuds, piétons fixes et piéton mobile, et au drone ce nouvel état, par des moyens radio par exemple.

Au moins trois nœuds vont passer dans une position fixe pour permettre la géolocalisation de l'ensemble des nœuds du système. Tant qu'il n'y a pas trois nœuds ou piétons dans une position quasi-statique, le procédé ne peut pas continuer la géolocalisation.

Le changement de mobilité peut résulter d'une décision sans rapport avec la géolocalisation, le nœud Mi décide, par exemple de changer de type de mobilité, 401a, 402. Ceci peut être initié, par exemple, par l'opérateur ou encore sur détection automatique. Le changement de type de mobilité d'un nœud peut aussi résulter d'une décision pour maintenir une géolocalisation après détection de perte de couverture GPS 401b, ce qui conduit au choix de trois nœuds, 403. Ainsi lors d'un changement de type de mobilité, le nœud concerné ainsi que les nœuds qui ont reçu l'information de changement de type de mobilité vont modifier leur filtre de poursuite.

Les piétons M₁, M₂, M₃ se sont échangés les informations relatives à leur état, mobile ou statique. Chaque piéton, choisit un type de mobilité 402. Chaque piéton dans un état statique choisit 404 un filtre de poursuite IMM(statique) adapté à cet état statique pour continuer à estimer sa position (sur la base des mesures de télémétrie sur ses voisins piétons statiques), respectivement P₁, P₂, P₃, transmettre cette information de mobilité et de position au piéton mobile M₄. Le piéton mobile M₄ et le drone 22 vont utiliser, 407 les informations de position transmises par au moins trois piétons dans un état statique et les mesures de télémétrie sur ces trois piétons afin de pouvoir se géolocaliser par des techniques de trilatération connues de l'homme du métier. Dans le cas du drone, cette étape correspond à une géolocalisation en deux dimensions qui sera complétée comme décrit ci-après pour le géolocaliser en trois dimensions, avec une première étape de géolocalisation par trilatération permettant de déterminer une trace au sol de l'aéronef en deux dimensions et déterminer une trace au sol de l'aéronef en deux dimensions et une second étape d'estimation de l'altitude. En l'absence d'au moins trois nœuds statiques, la géolocalisation n'est pas possible 406.

Le choix des nœuds à immobiliser peut être décidé par un centre de décision opérationnel (non représenté pour des raisons de simplification de figure) ou selon un mode opératoire prédéfini, par exemple selon un système de priorités associées aux nœuds du réseau. Un piéton peut alors décider de passer d'un état mobile à un état statique ou fixe en tenant compte des niveaux de priorités Np(Mi) définis à l'avance dans le système pour les différents nœuds. Les nœuds s'échangent ces informations sur leur niveau de priorité selon des techniques connues de l'homme du métier. Par exemple, certains piétons ne peuvent s'arrêter car leur action est prioritaire par rapport aux autres. Un exemple est le cas d'une brigade de pompiers intervenant sur un incendie. Dans ce cas, le processeur 12 du dispositif équipant un piéton va regarder dans les informations transmises par les autres piétons et le drone, les niveaux de priorité et les piétons dont le niveau de priorité est le plus faible s'arrêteront pour devenir des ancres fixes. Ces derniers sélectionneront alors le type de mobilité 'ancre fixe', ce qui aura pour effet de communiquer le changement de type de mobilité aux autres nœuds du réseau et, dans un premier temps, de diffuser la position courante sur la base de la dernière position estimée. Dans le cas de perte de signal GPS par la brigade de pompier, les nœuds mobiles pourront continuer à se géolocaliser en utilisant les piétons qui sont passés dans un état statique. Dans un second temps, les nœuds fixes pourront affiner et actualiser leur estimation de position en exploitant les mesures de télémétrie sur les nœuds fixes voisins.

Le drone peut utiliser au moins trois piétons dans un état statique pour estimer sa trace au sol, positionnement dans un plan à deux dimensions. Cette trace T(drone) au sol peut être estimée par trilatération à partir des mesures de télémétrie sur les nœuds qui disposent d'une géolocalisation (et en particulier les trois piétons fixes) en négligeant l'altitude. Cette approximation est acceptable lorsque l'altitude est faible devant l'élongation du réseau et les distances entre le drone et les nœuds géolocalisés, qui est l'hypothèse sous-jacente. A partir de cette trace au sol, repérage de sa position en x, y, et des mesures de distance entre les nœuds géolocalisés (et en particulier les piétons statiques) et le drone, le drone sera capable d'estimer son altitude en z et donc sa position Pd en trois dimensions. Dans le cas où le drone est équipé d'un altimètre ou d'un dispositif équivalent, l'information d'altitude pourra être exploitée et la position directement estimée en 3D.

A chaque changement de filtre de poursuite CMM (statique, fixe, changement de mobilité, ...), le vecteur d'état du filtre peut être réinitialisé si les variables d'état changent. Dans le cadre de nœud mobile, et selon les capteurs disponibles, cette réinitialisation peut reposer sur une « initialisation de piste » bien connue des gens du métier, par exemple détermination de plusieurs positions successives pour estimer un vecteur vitesse lors d'un changement de type de mobilité « ancre fixe » vers « mouvement rectiligne uniforme ».

Sans sortir du cadre de l'invention, le système pourrait être centralisé, un nœud du réseau centralisant alors toutes les mesures de distance entre nœuds et retransmettant les résultats de ses calculs de géolocalisation des nœuds du réseau à chacun des nœuds.

Le procédé s'applique dans le cas de nœuds hétérogènes pouvant changer de cinématique de manière dynamique, par exemple de la manière suivante :
- Passage en station fixe (arrêt, dépose) ou redémarrage,
- Changement de comportement : suivi de route, changement de direction, etc.

Les nœuds concernés sont par exemple des piétons, des véhicules terrestres, des navires, des drones, etc.

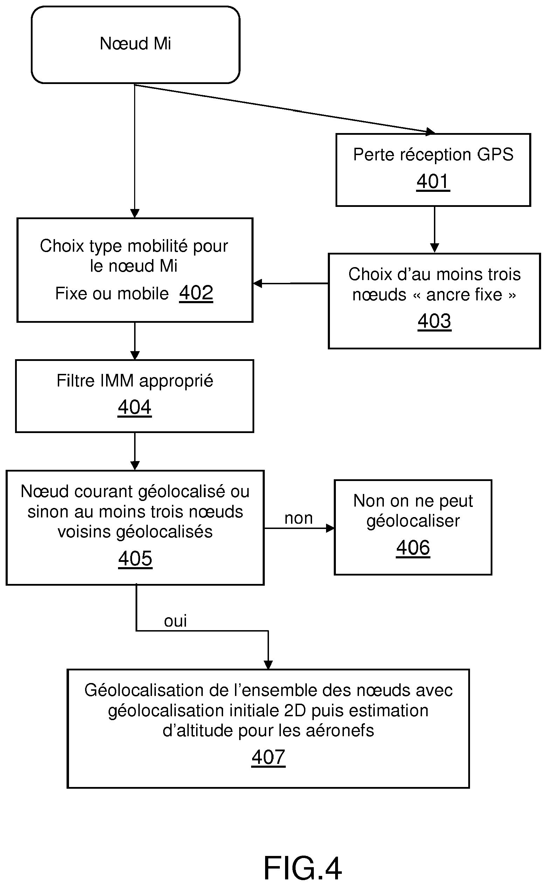

L'exemple détaillé et chiffré qui suit est donné à titre illustratif en relation avec la figure 4 montrant les étapes principales du procédé.

On considère un réseau collaboratif constitué de cinq nœuds déployés sur une zone carré de 1 km de côté. Quatre piétons évoluent au sol et un mini drone 22 est téléopéré par l'un des piétons, évoluant à une altitude de quelques dizaines de mètres. Chaque nœud dispose d'un GPS et d'une mesure de télémétrie sur les voisins (sur la forme d'onde MANET ou à l'aide d'un équipement spécifique). En situation « normale », tous les nœuds se géolocalisent et la navigation est possible sur tous les nœuds avec simplement un filtre de poursuite de type Kalman NCP, abréviation Nearly Constant Position, filtre de Kalman d'ordre 0 avec bruit sur la position. Face à un risque de perte du GPS (brouillage par exemple), 401, les trois nœuds piétons qui ne téléopèrent pas le drone décident de devenir des ancres fixes, 402, 403. Le piéton qui pilote le drone peut également décider de basculer le drone dans un modèle de poursuite de type NCV, abréviation anglo-saxonne de Nearly Constant Velocity, plus précis pour la poursuite de séquences de navigation par tronçon de mouvement rectilignes uniformes.

En présence d'un déni de service GPS complet, les trois nœuds ancres fixes continuent à délivrer une position. L'algorithme de navigation (présent sur chacun des nœuds) selon le type de mobilité utilise alors les filtres de poursuite adaptés aux différents types de mobilité, par exemple, 404 :
- Pour une ancre fixe, un modèle de Kalman position fixe ou Fixed Position 2D,
- Pour un piéton, un modèle de Kalman NCP, 2D,
- Pour un Drone, un modèle de Kalman NCV, 3D.

A partir de ces nœuds, le nœud courant et au moins trois nœuds voisins sont géolocalisés, 405. Puis le procédé va géolocaliser au moins en deux dimensions, les autres nœuds du réseau et la trace au sol du drone 22.

En cas de déni de service GNSS complet, le procédé est capable de choisir au moins trois nœuds 404, 405 du réseau auxquels on impose de passer dans un état de mobilité quasi-statique. Ces trois nœuds son t utilisés comme des ancres pour géo localiser les autres nœuds par mesures de télémétrie.

Avec une solution de navigation classique, au bout de quelque temps (variable selon que les nœuds dispose ou pas de capteurs de navigation inertielle), aucun des pions ne pourrait se localiser en raison de la perte du GPS.

Avec la solution innovante, les cinq pions parviennent toujours à se géolocaliser et à déterminer une solution de navigation :
- Les trois nœuds devenus ancres fixes ne dérivent pas dans le temps (comme dans le cas précédent) et délivrent une bonne précision de positionnement, qui non seulement ne se dégrade pas, mais s'améliore progressivement en raison des mesures de télémétrie réalisées entre les trois nœuds et de la sélection du modèle de navigation « nœud fixe »,
- Les deux autres pions mobiles (piéton téléopérateur et drone) n'ont aucun mal à entretenir leur solution de navigation puisqu'ils continuent à se géolocaliser sans difficultés en 2D grâce aux trois nœuds précédents. Pour le drone, malgré le fait que l'altitude soit négligée, la position estimée en 2D donne approximativement sa position en latitude et longitude car l'allongement des mesures de ranging en 3D dû à l'altitude du drone et à la différence d'altitude avec les piétons au sol est faible devant les élongations au sol,
- L'altitude du drone peut ensuite être estimée en exploitant l'estimation de position 2D et les mesures de ranging sur les autres nœuds.
Dans le cas où le réseau ne comporte pas suffisamment de nœuds, alors il est impossible de géolocaliser les nœuds, 406.

Le procédé selon l'invention permet notamment de prendre en compte l'hétérogénéité des types de mobilité de nœuds dans un réseau de communication ainsi que le changement dynamique de type de mobilité sur un ou plusieurs nœuds. L'invention offre une continuité de service en tenant compte de l'évolution de l'état des nœuds.

## Revendications

1. Procédé permettant de géolocaliser un ou plusieurs nœuds dans un réseau de communication, lesdits nœuds communiquant entre eux par des moyens radios appropriés, chaque nœud transmettant au moins des informations de position, d'état de mobilité, tout ou une partie des nœuds étant équipés d'un récepteur qui, couplé avec un dispositif satellitaire (20), permet au nœud équipé du récepteur (11) de se géolocaliser, ledit récepteur (11) étant adapté à détecter une perte du signal satellitaire, le procédé comportant au moins les étapes suivantes :
Lors d'un changement de type de mobilité pour un premier nœud, ledit nœud ainsi que les autres nœuds du réseau qui reçoivent l'information de changement de type de mobilité dudit premier nœud choisissent un filtre de poursuite approprié pour le suivi de géolocalisation dudit nœud (402, 403), En cas de déni de service GNSS complet, trois nœuds (404, 405) du réseau sont élus et leur état de mobilité est passé dans un état de mobilité quasi-statique, lesdits trois nœuds étant utilisés comme des ancres pour géolocaliser les autres nœuds.

2. Procédé selon la revendication 1 **caractérisé en ce qu'**il comporte pour des nœuds aéronefs une étape de géolocalisation en trois dimensions comprenant une première étape de géolocalisation par trilatération afin de déterminer une trace au sol de l'aéronef en deux dimensions et une seconde étape d'estimation de l'altitude de l'aéronef.

3. Procédé selon l'une des revendications 1 ou 2 **caractérisé en ce que** le changement de type de mobilité, fixe, statique, changement de route de navigation d'un nœud est détecté automatiquement par un nœud.

4. Procédé selon l'une des revendications 1 ou 2 **caractérisé en ce que** le changement de type de mobilité, fixe, statique, changement de route de navigation d'un nœud est commandé par un ordre externe au réseau.

5. Procédé selon l'une des revendications 1 à 4 **caractérisé en ce que** selon le type de mobilité d'un nœud on utilise un filtre adapté :
- Pour une Ancre fixe, un modèle de Kalman « Fixed Position » 2D,
- Pour un Piéton mobile un modèle de Kalman NCP 2D,
- Pour un Drone, un modèle de Kalman NCV 3D.

6. Procédé selon l'une des revendications précédentes **caractérisé en ce qu'**en cas de déni de service GNSS complet, il comporte une étape d'élection d'au moins trois nœuds (404, 405) du réseau positionnés dans un état de mobilité quasi-statique et l'utilisation desdits trois nœuds comme des ancres pour géo localiser les autres nœuds par mesures de télémétrie.

7. Système comportant un ou plusieurs nœuds dans un réseau de communication, le système étant configuré pour géolocaliser lesdits nœuds, lesdits nœuds communiquant entre eux par des moyens radios appropriés, dans lequel les nœuds comprennent :
• Un dispositif de connaissance de la position d'un nœud,
• Un module de contrôle (15) adapté à détecter un changement dans le type de mobilité du nœud,
• Un module de communication adapté à transmettre au moins des informations de position, d'état de mobilité pour un noeud,
• Un processeur (12) adapté à exécuter les étapes du procédé selon l'une des revendications 1 à 6 afin de choisir un ensemble de filtres de poursuite CMM adaptés aux différents types de mobilité des nœuds afin de géolocaliser ledit nœud et de géolocaliser les nœuds du réseau ayant échangés des informations avec ledit nœud.

8. Système selon la revendication 7 **caractérisé en ce qu'**il comporte des nœuds de type de mobilité très hétérogènes tel qu'un réseau de véhicules terrestres complété d'un ou plusieurs aéronefs (22) et/ou de balises fixes.

9. Système selon l'une des revendications 7 ou 8 **caractérisé en ce qu'**un nœud comporte un dispositif GNSS.

## Patentansprüche

1. Verfahren zur Geolokalisierung eines oder mehrerer Knoten in einem Kommunikationsnetzwerk, wobei die Knoten untereinander über geeignete Funkmittel kommunizieren, wobei jeder Knoten mindestens Positions- und MobilitätszustandsInformationen übertragen, wobei ein Teil der oder alle Knoten mit einem Empfänger ausgerüstet sind, welcher, gekoppelt mit einer Satellitenvorrichtung (20), dem mit dem Empfänger (11) ausgerüsteten Knoten ermöglicht, sich zu geolokalisieren, wobei der Empfänger (11) geeignet ist, einen Verlust des Satellitensignals zu erkennen, wobei das Verfahren mindestens folgende Schritte beinhaltet:
bei einer Änderung der Mobilitätsart für einen ersten Knoten wählen dieser Knoten und die anderen Knoten des Netzwerks, welche die Information über die Änderung der Mobilitätsart des ersten Knotens empfangen, einen geeigneten Verfolgungsfilter für die Verfolgung der Geolokalisierung des Knotens (402, 403),
bei Verweigerung des vollständigen GNSS-Dienstes werden drei Knoten (404, 405) des Netzwerks ausgewählt und ihr Mobilitätszustand wird auf einen quasi statischen Mobilitätszustand umgestellt, wobei die drei Knoten als Anker zur Geolokalisierung der anderen Knoten verwendet werden.

2. Verfahren nach Anspruch 1, **dadurch gekennzeichnet, dass** es für Luftfahrzeug-Knoten einen Schritt der Geolokalisierung in drei Dimensionen beinhaltet, beinhaltend einen ersten Schritt der Geolokalisierung durch Trilateration, um eine Spur des Luftfahrzeugs am Boden in zwei Dimensionen zu bestimmen, und einen Schritt des Schätzens der Höhe des Luftfahrzeugs

3. Verfahren nach einem der Ansprüche 1 oder 2, **dadurch gekennzeichnet, dass** die Änderung der Mobilitätsart, fest, statisch, Änderung der Navigationsroute eines Knotens, automatisch durch einen Knoten erkannt wird.

4. Verfahren nach einem der Ansprüche 1 oder 2, **dadurch gekennzeichnet, dass** die Änderung der Mobilitätsart, fest, statisch, Änderung der Navigationsroute eines Knotens durch einen netzwerkfremden Befehl gesteuert wird.

5. Verfahren nach einem der Ansprüche 1 bis 4, **dadurch gekennzeichnet, dass**, je nach Mobilitätsart eines Knotens, einen geeigneten Filter verwendet wird:
- für einen festen Anker, ein Kalman-Filter, Modell "Fixed Position" 2D,
- für einen mobilen Fußgänger, einen Kalman-Filter, Modell NCP 2D,
- für eine Drohne, einen Kalman-Filter, Modell NCV 3D.

6. Verfahren nach einem der vorhergehenden Ansprüche, **dadurch gekennzeichnet, dass** es bei Verweigerung des vollständigen GNSS-Dienstes einen Schritt der Auswahl mindestens dreier Knoten (404, 405) des Netzwerks beinhaltet, welche in einem quasi statischen Mobilitätszustand positioniert sind, und der Verwendung der drei Knoten als Anker zur Geolokalisierung der anderen Knoten durch Telemetriemessungen.

7. System, beinhaltend einen oder mehrere Knoten in einem Kommunikationsnetzwerk, wobei das System zum Geolokalisieren der Knoten konfiguriert ist, wobei die Knoten miteinander durch geeignete Funkmittel kommunizieren, wobei die Knoten Folgendes beinhalten:
• eine Vorrichtung zum Kennen der Position eines Knoten,
• ein Kontrollmodul (15), welches geeignet ist, eine Änderung in der Mobilitätsart des Knotens zu erkennen,
• ein Kommunikationsmodul, welches geeignet ist, mindestens Positions- und Mobilitätszustandsinformationen für einen Knoten zu übertragen,
• einen Prozessor (12), welcher geeignet ist, die Schritte des Verfahrens nach einem der Ansprüche 1 bis 6 auszuführen, um eine Gruppe von Verfolgungsfiltern CMM auszuwählen, welche für die unterschiedlichen Mobilitätsarten der Knoten geeignet sind, um den Knoten zu geolokalisieren, und um diejenigen Knoten des Netzwerks zu geolokalisieren, welche Informationen mit dem Knoten ausgetauscht haben.

8. System nach Anspruch 7, **dadurch gekennzeichnet, dass** es Knoten mit sehr heterogenen Mobilitätsarten beinhaltet, wie beispielsweise ein Netzwerk von Straßenfahrzeugen, das um ein oder mehrere Luftfahrzeuge (22) und/oder um feste Baken ergänzt ist.

9. System nach einem der Ansprüche 7 oder 8, **dadurch gekennzeichnet, dass** ein Knoten eine GNNS-Vorrichtung beinhaltet.

## Claims

1. Method making it possible to geolocate one or more nodes in a communication network, said nodes communicating with one another by appropriate radio means, each node transmitting at least information regarding position, state of mobility, all or part of the nodes being equipped with a receiver which, coupled with a satellite device (20), makes it possible for the node equipped with the receiver (11) to geolocate itself, said receiver (11) being adapted to detect a loss of satellite signal, the method comprising at least the following steps:
upon a change of type of mobility for a first node, said node, as well as the other nodes of the network which receive the information item regarding a change of type of mobility of said first node, choose an appropriate tracking filter to follow the geolocalization of said node (402, 403),
in case of complete GNSS denial-of-service, three nodes (404, 405) of the network are elected and their state of mobility is switched to a state of quasi-static mobility, said three nodes being used as anchors to geolocate the other nodes.

2. Method according to Claim 1, **characterized in that** it comprises for aircraft nodes a step of geolocalization in three dimensions comprising a first step of geolocalization by trilateration to determine a ground trace of the aircraft in two dimensions and a second step of estimating the altitude of the aircraft.

3. Method according to one of Claims 1 or 2, **characterized in that** the change of type of mobility, fixed, static, change of navigation route of a node is detected automatically by a node.

4. Method according to one of Claims 1 or 2, **characterized in that** the change of type of mobility, fixed, static, change of navigation route of a node is controlled by an order external to the network.

5. Method according to one of Claims 1 to 4, **characterized in that** according to the type of mobility of a node, an adapted filter is used:
- for a fixed Anchor, a 2D "Fixed Position" Kalman model,
- for a mobile Pedestrian a 2D NCP Kalman model,
- for a Drone, a 3D NCV Kalman model.

6. Method according to one of the preceding claims, **characterized in that** in the event of complete GNSS denial-of-service, it comprises a step of electing at least three nodes (404, 405) of the network which are positioned in a state of quasi-static mobility and using said three nodes as anchors to geolocate the other nodes by telemetry measurements.

7. System comprising one or more nodes in a communication network, the system being configured for geolocating said nodes, said nodes communicating with one another by appropriate radio means, in which the nodes comprise:
• a device for ascertaining the position of a node,
• a control module (15) adapted to detect a change in the type of mobility of the node,
• a communication module adapted to transmit at least information regarding position, state of mobility for a node,
• a processor (12) configured to execute the steps of the method according to one of Claims 1 to 6 to choose a set of CMM tracking filters adapted to the various types of mobility of the nodes so as to geolocate said node and to geolocate the nodes of the network that have exchanged information with said node.

8. System according to Claim 7, **characterized in that** it comprises nodes of very heterogeneous types of mobility such as a network of terrestrial vehicles, which is supplemented with one or more aircraft (22) and/or with fixed beacons.

9. System according to one of Claims 7 or 8, **characterized in that** a node comprises a GNSS device.
